# EUROPÄISCHE PATENTSCHRIFT

(11) **EP 1 459 840 B1**
(45) Veröffentlichungstag und Bekanntmachung des Hinweises auf die Patenterteilung: **18.02.2009**
(21) Anmeldenummer: 04006228.3
(22) Anmeldetag: 16.03.2004
(51) Int. Cl.: B23Q 11/00, B23Q 11/08

(54) **Vorrichtung zum spanenden Bearbeiten von Werkstücken**
Cutting device for work pieces
Dispositif pour l'usinage de pièces par enlèvement de copeaux

(30) Priorität: 18.03.2003 DE 10311974
(43) Veröffentlichungstag der Anmeldung: 22.09.2004
(73) Patentinhaber: Homag Holzbearbeitungssysteme AG, 72296 Schopfloch (DE)
(72) Erfinder: Westfal, Ewald, 72160 Horb (DE); Graef, Jürgen, 73447 Oberkochen (DE); Kalmbach, Wilhelm, 72296 Schopfloch (DE); Oertel, Michael, 01097 Dresden (DE)
(74) Vertreter: HOFFMANN EITLE

(56) Entgegenhaltungen:
- DE-A- 2 603 330
- DE-A- 4 218 247
- DE-U- 9 420 667
- DE-U- 9 420 668

## Beschreibung

### Technisches Gebiet

Die vorliegende Erfindung betrifft eine Vorrichtung zum spanenden Bearbeiten von Werkstücken, insbesondere von Werkstücken aus Holzwerkstoffen, Kunststoff oder dergleichen, nach dem Oberbegriff von Anspruch 1.

### Stand der Technik

Vorrichtungen der eingangs genannten Art finden bei der spanenden Bearbeitung von Werkstücken aus Holzwerkstoffen, Kunststoff etc. breite Anwendung, beispielsweise bei der Kantenbearbeitung von Möbelfronten oder dergleichen. Die bekannten Vorrichtungen besitzen eine Absaugeinrichtung mit einer trichterartigen Spansammelhaube, die mit einer Saugluftquelle verbunden ist und mit der Trichteröffnung dem Werkzeug zugewandt ist, um die im Zuge der spanenden Bearbeitung erzeugten Späne abzusaugen.

Die bekannten Absaugeinrichtungen besitzen jedoch eine geringe Absaugeffizienz, d.h. zur Abfuhr der Späne ist eine sehr hohe Saugleistung erforderlich. Dies führt dazu, dass die bekannten Vorrichtungen einen sehr hohen Luftdurchsatz und einen entsprechend hohen Energiebedarf aufweisen, der in holzverarbeitenden Betrieben im Durchschnitt ca. 30% bis 50 % des gesamten Jahresstromverbrauchs ausmachen kann.

Trotz des hohen Energieeinsatzes ermöglichen die bekannten Vorrichtungen nur einen begrenzten Spanerfassungsgrad, sodass infolge mehrfacher Zerspanung nicht erfasster Späne ein erhöhter Werkzeugverschleiß, geringere Standzeiten und schließlich höhere Schadstoffbelastungen der Umgebungsluft resultieren. Nicht abgeführte Späne können sich darüber hinaus an der Werkstückoberfläche ansammeln oder ablagern und unerwünschte Eindruckspuren hinterlassen. Mehrfach zerspante Späne zeichnen sich insbesondere bei weicheren Werkstoffen, wie z.B. Holzwerkstoffen oder Kunstwerkstoffen, durch unschöne Bearbeitungsspuren am Werkstück ab. Dies führt zu einer Herabsetzung der Werkstückqualität, was nicht erstrebenswert ist.

Vorrichtungen der zuvor beschriebenen Art benötigen für eine zufriedenstellende Spanabführung deshalb insbesondere bei hohen Schnittgeschwindigkeiten bzw. hohen Drehzahlen große Absauggeschwindigkeiten und extrem leistungsstarke Absaugeinrichtungen. Entsprechend hoch ist deshalb nicht nur der Energiebedarf, sondern auch die von den Absauganlagen ausgehende Lärmbelastung.

Ferner offenbart die DE 100 49 500 A1 eine Vorrichtung zum spanenden Bearbeiten von Werkstücken nach dem Oberbegriff von Anspruch 1.

### Zusammenfassung der Erfindung

Es ist daher Aufgabe der vorliegenden Erfindung, eine Vorrichtung zum spanenden Bearbeiten von Werkstücken, insbesondere von Werkstücken aus Holzwerkstoffen, Kunststoff oder dergleichen bereitzustellen, die eine verbesserte Effizienz der Spanabsaugung besitzt.

Diese Aufgabe wird erfindungsgemäß durch eine Vorrichtung mit den Merkmalen von Anspruch 1 gelöst.

Der vorliegenden Erfindung liegt der Gedanke zugrunde, die Absaugeffizienz der erfindungsgemäßen Vorrichtung dadurch zu verbessern, dass die Spansammelhaube derart angeordnet und ausgebildet ist, dass die Späne zielgerichtet erfasst und zügig abgeführt werden können. Zu diesem Zweck ist erfindungsgemäß vorgesehen, dass die Spansammelhaube das Werkstück hülsen- bzw. mantelartig umschließt. Durch die Umschließung des Werkstücke kann eine unerwünschte Ausbreitung anfallender Späne bereits unmittelbar nach deren Entstehung verhindert werden, so dass die Späne zuverlässig aufgenommen bzw. "eingefangen" werden.

Darüber hinaus sorgt die erfindungsgemäße Ausbildung der Spansammelhaube für einen zügigen und zuverlässigen Abtransport der Späne. Da nämlich der Querschnitt des mindestens einen Spanerfassungsraumes von der Eintrittsöffnung bis zum Austrittsbereich zunimmt, wird nicht nur ausreichend Raum innerhalb der Spansammelhaube für den Abtransport bereitgestellt, sondern es werden auch strömungstechnische Vorteile erzielt. So tritt bei der erfindungsgemäßen Spansammelhaube die maximale Strömungsgeschwindigkeit der Absaugluft im Bereich der Eintrittsöffnung auf, da diese den geringsten Querschnitt besitzt. Hierdurch werden auch öffnungsnahe Späne außerhalb der Spansammelhaube angesaut und ein mögliches Austreten bereits aufgenommner Späne wird zuverlässig verhindert.

Schließlich wird mit der erfindungsgemäßen Spansammelhaube auch der Luftdurchsatz gering gehalten.

Dementsprechend lässt sich mit der erfindungsgemäßen Vorrichtung die Effizienz der Spanabsaugung gegenüber dem Stand der Technik erheblich verbessern. Sie ermöglicht einen hohen Grad der Spanabsaugung bei geringem Energieeinsatz und vermindertem Geräuschniveau. Hierdurch werden nicht nur die Energiekosten gesenkt und die Umwelt geschont, sondern es wird auch das schädliche mehrfache Spanen minimiert, was die Lebensdauer des Werkzeuges deutlich erhöht. Schließlich werden die Werkstücke ebenso wie Maschinenteile, z. B. Transportkette, Kantenmagazin und dergleichen, vor unerwünschten Spanablagerungen geschützt.

Gemäß einer Weiterbildung der vorliegenden Erfindung weist der Raum der Spanerfassungshaube einen zweiten Spanerfassungsraum auf. Dieser trägt dazu bei, die Spanerfassungseffizienz weiter zu verbessern, indem der zweite Spanerfassungsraum derart angeordnet und ausgelegt werden kann, um Restspäne, die im ersten Spanerfassungsraum noch nicht erfasst wurden, abzuführen. Darüber hinaus ermöglicht es der zweite Spanerfassungsraum, die jeweiligen Strömungsverhältnisse der Späne vorteilhaft zu berücksichtigen.

Dabei ist es besonders bevorzugt, dass der Querschnitt des mindestens einen Spanerfassungsraumes von der Eintrittsöffnung bis zum Austrittsbereich stetig, insbesondere konisch, zunimmt. Eine stetige, insbesondere konische Form des mindestens einen Spanerfassungsraumes ergibt nicht nur eine kontinuierliche Spanführung, sondern verhindert bzw. vermindert auch eine Reflektion der Späne von den Wänden des Spanerfassungsraumes zurück auf das Werkzeug. In diesem Zusammenhang haben die Erfinder festgestellt, dass der Einfallwinkel der Späne auf die Wandungsflächen der Spanerfassungsräume im Wesentlichen dem Ausfallwinkel entspricht, sodass Späne, die auf die Wandung des konischen Spanerfassungsraumes treffen in Richtung des Austrittsbereichs (und nicht zu dem Werkzeug) weitergeleitet werden. Dieser Vorgang wird durch den Saugluftstrom in synergetischer Weise unterstützt, sodass sich eine optimale Spanabfuhr in dem mindestens einen Spansammelraum ergibt. Schädliches Mehrfachspannen wird hierdurch vermieden.

Im Hinblick auf eine einfache und kostengünstige Herstellung der erfindungsgemäßen Vorrichtung ist es bevorzugt, dass der mindestens eine Spanerfassungsraum durch Wandabschnitte begrenzt ist, die gegenüber der Rotationsachse des Werkzeugkörpers geneigt sind. Hierdurch lassen sich die oben genannten Vorteile eines sich konisch erweiternden Spanerfassungsraumes auf einfache und kostengünstige Weise realisieren.

Um eine möglichst frühzeitige Erfassung der Späne unmittelbar nach ihrer Entstehung zu gewährleisten, ist gemäß einer Weiterbildung der vorliegenden Erfindung bevorzugt, dass der erste Spanerfassungsraum benachbart der Schneidenöffnung angeordnet ist. Dabei ergibt sich eine besonders effiziente Erfassung der Späne, wenn der erste Spanerfassungsraum in Rotationsrichtung des Werkzeugs benachbart zu der Schneidenöffnung gelegen ist, sodass die Späne unmittelbar in den ersten Spanerfassungsraum geschleudert werden.

Darüber hinaus haben die Erfinder festgestellt, dass trotz einer effizienten Spanabsaugung und -abfuhr in einem ersten Spanerfassungsraum gewisse Mengen von Restspänen an dem Werkzeug verbleiben können. Aus diesem Grunde ist gemäß einer Weiterbildung der vorliegenden Erfindung mindestens ein zweiter Spanerfassungsraum vorgesehen, der im Wesentlichen gegenüberliegend zu dem ersten Spanerfassungsraum angeordnet ist. Mittels dieses mindestens einen weiteren Spanerfassungsraumes lässt sich die Spanabsaugungseffizienz noch weiter verbessern, ohne dass die Gesamtvorrichtung erheblich komplizierter würde. Dem mindestens einen zweiten Spanerfassungsraum kommt dabei die Aufgabe einer gewissen Nachreinigung zu, die dafür sorgt, dass ein Austreten von Spänen aus der Spanerfassungshaube zusammen mit dem rotierenden Werkzeug und die hiermit verbundenen oben beschriebenen Nachteile weitgehend vermieden werden.

Gemäß einer Weiterbildung der vorliegenden Erfindung weist die Absaugeinrichtung eine Grundplatte auf, die eine Absaugöffnung besitzt, die zwischen dem Austrittsbereich der Spansammelhaube und der Saugluftquelle angeordnet ist. Die Grundplatte dient im Rahmen der vorliegenden Erfindung nicht nur als Träger für die Spanerfassungshaube, sondern ermöglicht auch einen variablen Anschluss der Spanerfassungshaube an die Saugluftquelle. Dabei ist es besonders bevorzugt, dass die Absaugöffnung zumindest im Bereich des ersten Spansammelraumes angeordnet ist, um einen unmittelbaren und ungehinderten Spänestrom von der Spansammelhaube zu der Saugluftquelle zu ermöglichen.

Ferner weist die Grundplatte gemäß einer Weiterbildung der vorliegenden Erfindung einen Spanleitkanal auf, der sich bevorzugt von dem zweiten Spansammelraum und/oder weiteren Spansammelräumen zu der Absaugöffnung erstreckt. Hierdurch werden die gesammelten Späne direkt von dem zweiten Spansammelraum zu der Absaugöffnung und somit der Saugluftquelle geführt, ohne dass aufwendige Zusatzvorrichtungen erforderlich sind oder das Werkzeug in seinem Betrieb gestört würde. Dabei lässt sich eine weitere Steigerung der Absaugeffizienz der erfindungsgemäßen Vorrichtung dadurch erzielen, dass der Spanleitkanal derart angeordnet ist, dass er zumindest abschnittsweise außerhalb des Flugkreises der mindestens einen Schneide zum Liegen kommt. Hierdurch trägt der Spanleitkanal nicht nur zur Abfuhr der gesammelten Späne bei, sondern bildet auch selbst zumindest abschnittsweise einen Spansammelraum, der in der Grundplatte gelegen ist, was die Absaugeffizienz weiter verbessert.

Um das Anlagern von extrem haftfähigen Spänen, wie sie beispielsweise bei der Bearbeitung von Werkstücken auftreten, die Leim oder dergleichen enthalten, zu verhindern, ist gemäß einer Weiterbildung der vorliegenden Erfindung vorgesehen, dass die Spanerfassungshaube mindestens eine Düsenöffnung aufweist, die in mindestens einen Spanerfassungsraum mündet und bevorzugt in einem Wandabschnitt vorgesehen ist. Zu der mindestens einen Düsenöffnung lässt sich bedarfsweise oder kontinuierlich Druckluft oder ein ähnliches Medium fördern, um den mindestens einen Spansammelraum frei von Ablagerungen zu halten, Verstopfungen zu verhindern bzw. zu beseitigen und gegebenenfalls auch die Strömungsverhältnisse je nach Anwendung zu beeinflussen.

Gemäß einer Weiterbildung der vorliegenden Erfindung weist die Vorrichtung eine Verstelleinrichtung auf, mittels der der Abstand zwischen der Spansammelhaube und dem Werkstück einstellbar ist. Auf diese Weise können beispielsweise Abweichungen am Werkzeugradius, die z. B. durch Nachschärfen und Abnutzung entstehen, auf einfache Weise ausgeglichen werden.

Ferner besitzt die Vorrichtung gemäß einer Weiterbildung der vorliegenden Erfindung eine Abdeckeinrichtung, die den Spalt zwischen Werkstück und Spansammelhaube zumindest abschnittsweise abdeckt. Hierdurch wird die Spanabsaugungseffizienz weiter verbessert, indem nicht unmittelbar angesaugte Späne zumindest im Bereich der Spansammelhaube verbleiben und dann angesaugt werden können, in jedem Falle aber die Umgebung der Spansammelhaube bzw. des Bearbeitungsbereichs nicht beeinträchtigen. Dabei ist es besonders bevorzugt, dass die Abdeckeinrichtung ein elastisches Element, insbesondere ein Federblech aufweist, da hierdurch auf einfache Weise auch ein Abstandsausgleich erzielt wird, wie er beispielsweise im Hinblick auf die oben genannte Verstelleinrichtung sinnvoll ist. Ferner ist es bevorzugt, dass die Abdeckeinrichtung in Spanauswurfrichtung des Werkzeugs angeordnet ist, da in diesem Bereich der größte Späneanfall zu verzeichnen ist.

### Kurze Beschreibung der Zeichnungen

- Fig. 1: zeigt schematisch eine Perspektivansicht einer bevorzugten Ausführungsform einer Spanerfassungshaube gemäß der vorliegenden Erfindung;
- Fig. 2: zeigt schematisch eine Perspektivansicht einer Ausführungsform einer Grundplatte gemäß der vorliegenden Erfindung zusammen mit einem rotierenden Werkzeug;
- Fig. 3: zeigt schematisch eine Perspektivansicht einer bevorzugten Ausführungsform der erfindungsgemäßen Abdeckhaube zusammen mit einem rotierenden Werkzeug während der Bearbeitung;
- Fig. 4: zeigt schematisch eine Seitenansicht einer bevorzugten Ausführungsform der erfindungsgemäßen Abdeckhaube zusammen mit einem rotierenden Werkzeug während der Bearbeitung.

### Ausführliche Beschreibung bevorzugter Ausführungsformen

Bevorzugte Ausführungsformen der vorliegenden Erfindung werden nachfolgend ausführlich unter Bezugnahme auf die begleitenden Zeichnungen beschrieben.

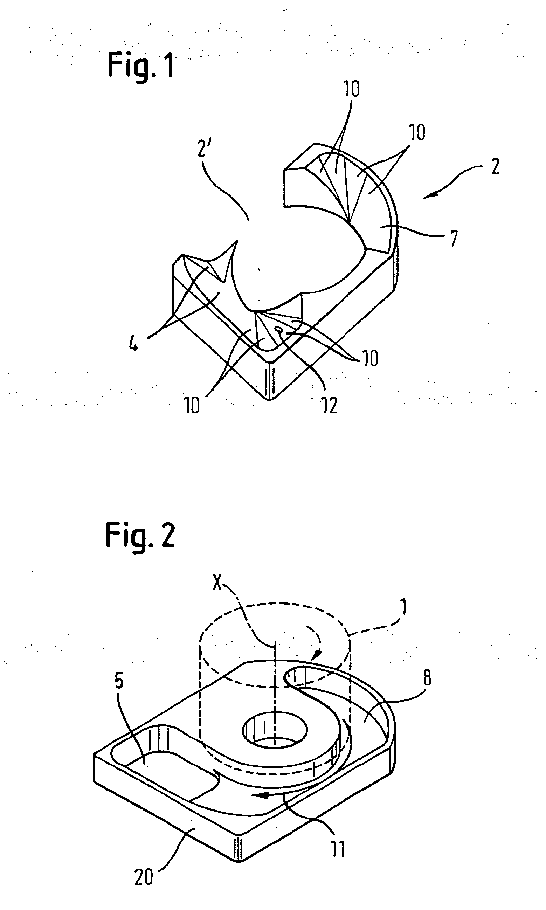

Figuren 1 bis 4 zeigen schematisch eine bevorzugte Ausführungsform einer erfindungsgemäßen Vorrichtung V zum spanenden Bearbeiten von Werkstücken 3. Bei den Werkstücken 3 handelt es sich insbesondere um solche aus Holzwerkstoffen, Kunststoff oder dergleichen, die häufig langgestreckt oder plattenförmig sind, ohne dass die vorliegende Erfindung hierauf beschränkt ist.

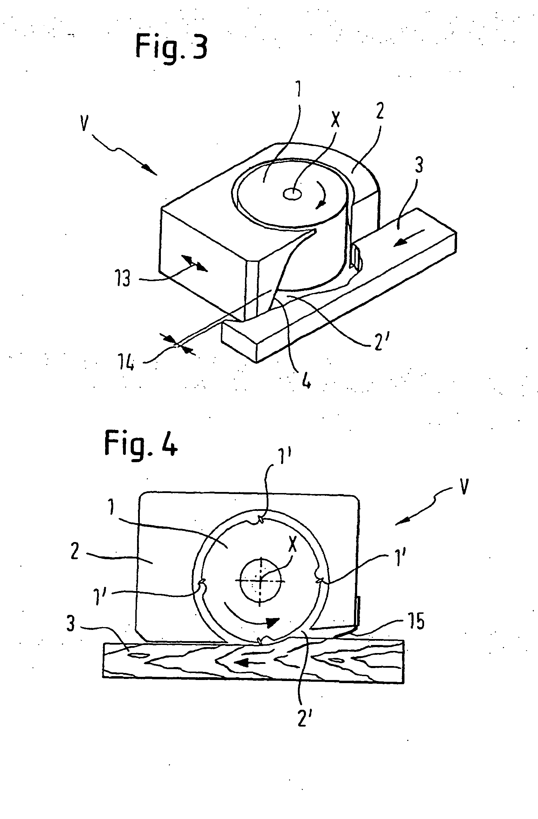

Wie in Figuren 2 bis 4 zu erkennen ist, besitzt die Vorrichtung V ein spanabtragendes, rotierendes Werkzeug 1, das auf seinem äußeren Umfang im vorliegenden Ausführungsbeispiel mit vier Schneiden 1' ausgestattet ist. Dabei rotiert das Werkzeug 1 um eine Rotationsachse X (Figuren 3 und 4) und ist durch eine bekannte, in den Figuren nicht gezeigte Antriebseinrichtung rotierend angetrieben.

Darüber hinaus umfasst die erfindungsgemäße Vorrichtung V eine Spansammelhaube 2, die in Fig. 1 schematisch in einer Perspektivansicht dargestellt ist. Die Spansammelhaube 2 umschließt mit ihrer Innenfläche einen Raum mit einem ersten Spanerfassungsraum 4 und einem zweiten Spanerfassungsraum 7. Wie insbesondere in Figuren 3 und 4 zu erkennen ist, umschließt die Spansammelhaube 2 das Werkzeug 1 hülsen- bzw. mantelartig, wobei umfangsseitig im Bereich des Wirkungsortes der Schneiden 1' eine Schneidenöffnung 2' vorgesehen ist, um die Bearbeitung des Werkstücks 3 zu ermöglichen. Ferner ist die hülsen- bzw. mantelartige Spansammelhaube 2 stirnseitig auf der einen Seite mit einer Eintrittsöffnung und stirnseitig auf der gegenüberliegenden Seite mit einem Austrittsbereich für Saugluft ausgestattet, wobei der Austrittsbereich mit einer in den Figuren nicht gezeigten Saugluftquelle in Verbindung steht.

Wie in Fig. 1 besonders gut zu erkennen ist, nimmt der Querschnitt des mindestens einen Spanerfassungsraumes 4 von der Eintrittsöffnung (der in Fig. 1 vom Betrachter abgewandten Seite) bis zum Austrittsbereich (der in Fig. 1 dem Betrachter zugewandten Seite) stetig zunimmt. Dabei besitzen der erste Spanerfassungsraum 4 und der zweite Spanerfassungsraum 7 jeweils Wandabschnitte 10, die gegenüber der Rotationsachse X des Werkzeugkörpers 1 derart geneigt sind, dass der Querschnitt der Spanerfassungsräume 4, 7 von der Eintrittsöffnung bis zum Austrittsbereich entlang dieser Wände 10 konisch zunimmt.

Der erste Spanerfassungsraum 4 ist in der vorliegenden Ausführungsform benachbart zu der Schneidenöffnung 2', und zwar in Rotationsrichtung des Werkzeugs 1 gelegen, angeordnet. Währenddessen ist der zweite Spanerfassungsraum 7 im Wesentlichen gegenüberliegend zu dem ersten Spanerfassungsraum 4 angeordnet und befindet sich somit ebenfalls relative nahe zu der Schneidenöffnung 2', jedoch in der Rotationsrichtung des Werkzeugs hinter dem ersten Spanerfassungsraum 4 gelegen.

Die Absaugeinrichtung besitzt in der vorliegenden Ausführungsform eine Grundplatte 20, die in Fig. 2 schematisch in einer Perspektivansicht dargestellt ist und eine Absaugöffnung 5 aufweist, die zwischen dem Austrittsbereich der Spansammelhaube 2 und der Saugluftquelle angeordnet ist. Im zusammengesetzten Zustand kommt die Absaugöffnung 5 im Bereich des ersten Spansammelraumes 4 zum liegen. Dabei ist zu beachten, dass die Grundplatte 20 und die Spansammelhaube 2 ebenso einstückig als Einheit ausgebildet sein können.

Darüber hinaus weist die Grundplatte 20 einen Spanleitkanal 8 auf, der sich von der Absaugöffnung 5 bogenartig derart erstreckt, dass er im zusammengebauten Zustand im Bereich des zweiten Spansammelraumes 7 endet. Krümmung und Breite des Spanleitkanals 8 sind in der vorliegenden Ausführungsform derart ausgelegt, dass der Spanleitkanal 8 im zusammengesetzten Zustand der Absaugeinrichtung zumindest abschnittsweise außerhalb des Flugkreises der mindestens einen Schneide 1' zum liegen kommt.

Ferner weist die Spanerfassungshaube, wie in Fig. 1 zu erkennen ist, eine Düsenöffnung 12 auf, die im vorliegenden Ausführungsbeispiel in den ersten Spanerfassungsraum 4 mündet und in einem der Wandabschnitte 10 vorgesehen ist. Zu der Düsenöffnung wird ein Druckmedium, insbesondere Druckluft, von einer nichtgezeigten Druckmediumquelle bedarfsweise oder kontinuierlich zugeführt.

Wie in Fig. 4 zu erkennen ist, weist die erfindungsgemäße Vorrichtung ferner eine Abdeckeinrichtung in Form eines Federblechs 15 auf, das in Spanauswurfrichtung des Werkzeugs 1 angeordnet ist und ein Austreten von Spänen sowie einen Abstandsausgleich ermöglicht. Um Abweichungen an dem Werkzeugradius (z.B. durch Nachschärfen) auszugleichen, weist die erfindungsgemäße Vorrichtung eine in den Figuren nicht gezeigte Verstelleinrichtung auf, mittels der der Abstand 14 zwischen der Spansammelhaube 2 und dem Werkstück 3 in Richtung des in Fig. 3 gezeigten Pfeils 13 einstellbar ist.

Die Funktionsweise der erfindungsgemäßen Vorrichtung zum spanenden Bearbeiten von Werkstücken wird nachfolgend beschrieben. Wie in Figuren 3 und 4 zu erkennen ist, werden mit der erfindungsgemäßen Vorrichtung V Werkstücke 3 mittels des rotierenden Werkzeugs 1 bearbeitet. Dabei kann die Bearbeitung sowohl im Gleichlauf (Fig. 3) als auch im Gegenlauf (Fig. 4) erfolgen. Im Zuge des spanenden Bearbeitungsvorgangs fallen kontinuierlich Späne an, die von dem bearbeiteten Werkstück abgetragen werden. Diese Späne werden von den Schneiden 1' aufgenommen und in Rotationsrichtung des Werkzeugs 1 im wesentlichen tangential zum Flugkreis der Schneide 1' abgeschleudert.

Die abgeschleuderten Späne treten unmittelbar in den ersten Spanerfassungsraum 4 ein und treffen dort zumindest teilweise auf die Wandflächen, die den ersten Spanerfassungsraum 4 definieren, auf. Aufgrund der erfindungsgemäßen Anordnung der Wandflächen, insbesondere der Zunahme des Querschnitts des Spanerfassungsraums, werden die Späne von den Wandflächen nicht auf das Werkzeug 1 zurückgeschleudert, sondern derart "reflektiert", dass sie im wesentlichen in Richtung der Austrittsöffnung 5 der Grundplatte 20 weitergeschleudert werden.

Eine kontinuierliche und störungsfreie Bewegung der Späne in Richtung der Austrittsöffnung 5 und der sich anschließenden Saugluftquelle wird auch durch die Strömungsverhältnisse innerhalb des Spanerfassungsraums unterstützt. Die in den Figuren nicht gezeigte Saugluftquelle erzeugt eine kontinuierliche Luftströmung innerhalb des Spanerfassungsraums 4, der die Späne unmittelbar nach dem Abtragungsvorgang erfasst und zu der Absaugöffnung 5 mitreißt. Dabei ist aufgrund der Querschnittgeometrie des Spanerfassungsraumes 4 die Strömungsgeschwindigkeit der Ansaugluft im Bereich der Eintrittsöffnung des Spanerfassungsraums am größten, sodass hier ein besonders wirksames Aufnehmen und Weiterleiten der Späne stattfindet. Hierdurch wird insbesondere in Kombination mit der erfindungsgemäßen Ausbildung der Spanerfassungsräume die Effizienz der Spanabsaugung im Vergleich zu herkömmlichen Absaughauben extrem verbessert.

Darüber hinaus findet im Bereich des zweiten Spanerfassungsraums 7 gewissermaßen eine Nachreinigung des rotierenden Werkzeugs 1 bzw. der Schneiden 1' statt, indem dort an dem Werkzeug verbleibende Spanreste aufgenommen und in Richtung des in Fig. 2 gezeigten Pfeils 11 abgeführt werden. Dabei ist zu beachten, dass auch der zweite Spanerfassungsraum 7 über den Spanleitkanal 8 mit der Absaugöffnung 5 und somit der Saugluftquelle in Verbindung steht, sodass auch hier prinzipiell dieselben Mechanismen der Spanaufnahme und -weiterleitung zu beobachten sind wie beim ersten Spanerfassungsraum 4. Auf diese Weise kann die Spanerfassungseffizienz der erfindungsgemäßen Vorrichtung noch weiter gesteigert werden.

Schließlich ist festzustellen, dass der Spanleitkanal 8 in der vorliegenden Ausführungsform nicht nur zur bloßen Weiterleitung der Späne aus dem zweiten Spanerfassungsraum 7 zur Absaugöffnung 5 dient, sondern aufgrund seiner besonderen Ausbildung auch dazu beiträgt, zwischen dem ersten Spanerfassungsraum 4 und dem zweiten Spanerfassungsraum 7 eine kontinuierliche Spanerfassung zu ermöglichen.

Die in Fig. 1 gezeigte Druckluftdüse 12 kann entweder kontinuierlich oder auch nur bedarfsweise betrieben werden, um das Anhaften von klebstoffhaltigen Spänen oder dergleichen an den Wandflächen 10 zu verhindern, Verstopfungen des Spanerfassungsraums 4 zu beseitigen oder die Strömungsverhältnisse innerhalb des ersten Spanerfassungsraums 4 gezielt zu beeinflussen.

## Patentansprüche

1. Vorrichtung (V) zum spanenden Bearbeiten von Werkstücken (3), insbesondere von Werkstücken aus Holzwerkstoffen, Kunststoff oder dergleichen, umfassend
mindestens ein spanabtragendes, rotierendes Werkzeug (1) mit wenigstens einer am Umfang des Werkzeugs angeordneten Schneide (1'),
eine mit einer Saugluftquelle verbundene Absaugeinrichtung für Späne, die eine das Werkzeug (1) zumindest teilweise umgebende Spansammelhaube (2) aufweist, die mit ihrer Innenfläche einen Raum mit mindestens einem ersten Spanerfassungsraum (4) umschließt, wobei
die Spansammelhaube (2) das Werkzeug (1) hülsen- bzw. mantelartig umschließt, und
die hülsen- bzw. mantelartige Spansammelhaube (2) umfangsseitig im Bereich des Wirkungsortes der Schneiden (1') eine Schneidenöffnung (2') aufweist und stirnseitig auf der einen Seite mit einer Eintrittsöffnung versehen ist und mit einem Austrittsbereich (5) für die Saugluft ausgestattet ist, wobei der Austrittsbereich mit der Saugluftquelle in Verbindung steht,
**dadurch gekennzeichnet, dass**
der Austrittsbereich (5) stirnseitig auf der gegenüberliegenden Seite der Eintrittsöffnung angeordnet ist,
und der Querschnitt des mindestens einen Spanerfassungsraumes (4) von der Eintrittsöffnung bis zum Austrittsbereich zumindest abschnittsweise zunimmt.

2. Vorrichtung nach Anspruch 1, **dadurch gekennzeichnet, dass** der Raum der Spanerfassungshaube (2) einen zweiten Spanerfassungsraum (7) aufweist.

3. Vorrichtung nach Anspruch 1 oder 2, **dadurch gekennzeichnet, dass** der Querschnitt des mindestens einen Spanerfassungsraumes (4, 7) von der Eintrittsöffnung bis zum Austrittsbereich stetig, insbesondere konisch, zunimmt.

4. Vorrichtung nach einem der vorhergehenden Ansprüche, **dadurch gekennzeichnet, dass** der mindestens eine Spanerfassungsraum (4, 7) durch Wandabschnitte (10) begrenzt ist, die gegenüber der Rotationsachse (X) des Werkzeugs (1), geneigt sind.

5. Vorrichtung nach einem der vorhergehenden Ansprüche, **dadurch gekennzeichnet, dass** der erste Spanerfassungsraum (4) benachbart zu der Schneidenöffnung (2'), bevorzugt in Rotationsrichtung des Werkzeugs (1) gelegen, angeordnet ist.

6. Vorrichtung nach einem der Ansprüche 2 bis 5, **dadurch gekennzeichnet, dass** der zweite Spanerfassungsraum (7) im wesentlichen gegenüber liegendend zu dem ersten Spanerfassungsraum (4) angeordnet ist.

7. Vorrichtung nach einem der vorhergehenden Ansprüche, **dadurch gekennzeichnet, dass** die Absaugeinrichtung eine Grundplatte (20) aufweist, die eine Absaugöffnung (5) besitzt, die zwischen dem Austrittbereich der Spansammelhaube (2) und der Saugluftquelle angeordnet ist.

8. Vorrichtung nach einem der vorhergehenden Ansprüche, **dadurch gekennzeichnet, dass** die Absaugöffnung (5) zumindest im Bereich des ersten Spansammelraumes (4) angeordnet ist.

9. Vorrichtung nach Anspruch 7, **dadurch gekennzeichnet, dass** die Grundplatte (20) einen Spanleitkanal (8) aufweist, der sich bevorzugt von dem zweiten Spansammelraum (7) und/oder weiteren Spansammelräumen zu der Absaugöffnung (5) erstreckt.

10. Vorrichtung nach Anspruch 9, **dadurch gekennzeichnet, dass** der Spanleitkanal (8) derart angeordnet ist, dass er zumindest abschnittsweise außerhalb des Flugkreises der zumindest einen Schneide (1') zum Liegen kommt.

11. Vorrichtung nach einem der vorhergehenden Ansprüche, **dadurch gekennzeichnet, dass** die Spanersammelhaube (2) mindestens eine Düsenöffnung (12) aufweist, die in mindestens einen Spanerfassungsraum (4, 7) mündet und bevorzugt in einem Wandabschnitt (10) vorgesehen ist.

12. Vorrichtung nach einem der vorhergehenden Ansprüche, **dadurch gekennzeichnet, dass** sie eine Verstelleinrichtung aufweist, mittels der der Abstand (14) zwischen der Spanersammelhaube (2) und dem Werkstück (3) einstellbar ist.

13. Vorrichtung nach einem der vorhergehenden Ansprüche, **dadurch gekennzeichnet, dass** sie eine Abdeckeinrichtung (15) aufweist, die den Spalt zwischen Werkstück (3) und Spansammelhaube (2) zumindest abschnittsweise abdeckt.

14. Vorrichtung nach Anspruch 13, **dadurch gekennzeichnet, dass** die Abdeckeinrichtung (15) ein elastisches Element, insbesondere ein Federblech (15) aufweist, das bevorzugt in Spanauswurfrichtung des Werkzeugs (1) angeordnet ist.

## Claims

1. Apparatus (V) for working work pieces (3) by stock removal, in particular work pieces made of wood materials, plastic or the like, comprising
at least one stock-removing, rotating tool (1) having at least one cutting edge (1') arranged at the circumference of the tool,
an extractor for chips which is connected to a suction air source and which has a chip collecting hood (2) which at least partially surrounds the tool (1) and which with its inner surface surrounds a space having at least one first chip collecting chamber (4), wherein
the chip collecting hood (2) surrounds the tool (1) like a sleeve, and
the sleeve-like chip collecting hood (2) has a cutting edge opening (2') circumferentially in the region of the working location of the cutting edges (1') and at the end face on one side is provided with an inlet opening and is provided with an outlet region (5) for the suction air, the outlet region being connected to the suction air source,
**characterised in that**
the outlet region (5) is arranged at the end face on the opposite side to the inlet opening,
and the cross-section of the at least one chip collecting chamber (4) increases at least in one section from the inlet opening to the outlet region.

2. Apparatus according to claim 1, **characterised in that** the space of the chip collecting hood (2) has a second chip collecting chamber (7).

3. Apparatus according to claim 1 or 2, **characterised in that** the cross-section of the at least one chip collecting chamber (4, 7) increases steadily, in particular conically, from the inlet opening to the outlet region.

4. Apparatus according to any of the preceding claims, **characterised in that** the at least one chip collecting chamber (4, 7) is defined by wall sections (10) which are inclined relative to the axis of rotation (X) of the tool (1).

5. Apparatus according to any of the preceding claims, **characterised in that** the first chip collecting chamber (4) is arranged adjacent to the cutting edge opening (2'), preferably lying in the direction of rotation of the tool (1).

6. Apparatus according to any of claims 2 to 5, **characterised in that** the second chip collecting chamber (7) is arranged substantially opposite the first chip collecting chamber (4).

7. Apparatus according to any of the preceding claims, **characterised in that** the extractor has a base plate (20) which has a suction opening (5) which is arranged between the outlet region of the chip collecting hood (2) and the suction air source.

8. Apparatus according to any of the preceding claims, **characterised in that** the suction opening (5) is arranged at least in the region of the first chip collecting chamber (4).

9. Apparatus according to claim 7, **characterised in that** the base plate (20) has a chip conducting channel (8) which extends preferably from the second chip collecting chamber (7) and/or further chip collecting chambers to the suction opening (5).

10. Apparatus according to claim 9, **characterised in that** the chip conducting channel (8) is arranged in such a way that it comes to lie at least in one section outside the cutting circle of the at least one cutting edge (1').

11. Apparatus according to any of the preceding claims, **characterised in that** the chip collecting hood (2) has at least one nozzle opening (12) which opens into at least one chip collecting chamber (4, 7) and is preferably provided in a wall section (10).

12. Apparatus according to any of the preceding claims, **characterised in that** it has an adjusting device by means of which the distance (14) between the chip collecting hood (2) and the work piece (3) is adjustable.

13. Apparatus according to any of the preceding claims, **characterised in that** it has a cover device (15) which at least in one section covers the gap between work piece (3) and chip collecting hood (2).

14. Apparatus according to claim 13, **characterised in that** the cover device (15) has a resilient element, in particular a spring plate (15), which is preferably arranged in the direction of ejection of chips of the tool (1).

## Revendications

1. Dispositif (V) pour l'usinage par enlèvement de copeaux de pièces d'oeuvre (3), en particulier de pièces d'oeuvre en bois, matière synthétique ou analogue, comprenant :
au moins un outil (1) rotatif, travaillant par enlèvement de copeaux, avec au moins un tranchant (1') disposé sur la périphérie de l'outil,
un dispositif d'aspiration, relié à une source d'air d'aspiration, pour des copeaux, présentant une hotte de collecte de copeaux (2), entourant au moins partiellement l'outil (1), enclosant par sa face intérieure une enceinte comprenant au moins une première enceinte de détection de copeaux (4), où
la hotte de collecte de copeaux (2) enclot l'outil (1), à la manière d'une douille ou d'une enveloppe, et
la hotte de collecte de copeaux (2), du genre d'une douille ou d'une enveloppe, présente, côté périphérie, dans la zone du lieu d'action des tranchants (1'), une ouverture à tranchant (2') et est munie, frontalement, sur un côté, d'une ouverture d'entrée, et équipée d'une zone de sortie (5) pour l'air d'aspiration, la zone de sortie étant reliée à la source d'air d'aspiration,
**caractérisé en ce que**
la zone de sortie (5) est disposée frontalement sur le côté opposé à l'ouverture d'entrée,
et la section transversale de la au moins une enceinte de détection de copeaux (4) va en augmentant, au moins par tronçons, en évoluant de l'ouverture d'entrée à la zone de sortie.

2. Dispositif selon la revendication 1, **caractérisé en ce que** l'enceinte de la hotte de collecte de copeaux (2) présente une deuxième enceinte de détection de copeaux (7).

3. Dispositif selon la revendication 1 ou 2, **caractérisé en ce que** la section transversale de la au moins une enceinte de détection de copeaux (4, 7) va en augmentant, de façon continue, en particulier conique, en évoluant de l'ouverture d'entrée à la zone de sortie.

4. Dispositif selon l'une des revendications précédentes, **caractérisé en ce que** la au moins une enceinte de détection de copeaux (4, 7) est délimitée par des tronçons de paroi (10), inclinés par rapport à l'axe de rotation (X) de l'outil (1).

5. Dispositif selon l'une des revendications précédentes, **caractérisé en ce que** la première enceinte de détection de copeaux (4) est disposée au voisinage de l'ouverture à tranchant (2'), de préférence placée dans la direction de rotation de l'outil (1).

6. Dispositif selon l'une des revendications 2 à 5, **caractérisé en ce que** la deuxième enceinte de détection de copeaux (7) est disposée sensiblement à l'opposé de la première enceinte de détection de copeaux (4).

7. Dispositif selon l'une des revendications précédentes, **caractérisé en ce que** le dispositif d'aspiration présente une plaque de base (20), comprenant une ouverture d'aspiration (5), disposée entre la zone de sortie de la hotte de collecte de copeaux (2) et la source d'air d'aspiration.

8. Dispositif selon l'une des revendications précédentes, **caractérisé en ce que** l'ouverture d'aspiration (5) est disposée au moins dans la zone de la première enceinte de collecte de copeaux (4).

9. Dispositif selon la revendication 7, **caractérisé en ce que** la plaque de base (20) présente un canal de guidage de copeaux (8), s'étendant de préférence de la deuxième enceinte de collecte de copeaux (7) et/ou d'autres enceintes de collecte de copeaux, à l'ouverture d'aspiration (5).

10. Dispositif selon la revendication 9, **caractérisé en ce que** le canal de guidage de copeaux (8) est disposé de manière qu'il vienne se placer, au moins par tronçons, à l'extérieur du cercle de vol du au moins un tranchant (1').

11. Dispositif selon l'une des revendications précédentes, **caractérisé en ce que** la hotte de collecte de copeaux (2) présente au moins une ouverture de buse (12), débouchant dans au moins une enceinte de détection de copeaux (4, 7) et prévue de préférence dans un tronçon de paroi (10).

12. Dispositif selon l'une des revendications précédentes, **caractérisé en ce qu'**il présente un dispositif de réglage, au moyen duquel l'espacement (14), entre la hotte de collecte de copeaux (2) et la pièce d'oeuvre (3) est réglable.

13. Dispositif selon l'une des revendications précédentes, **caractérisé en ce qu'**il présente un dispositif de recouvrement (15), recouvrant, au moins par tronçons, l'intervalle entre pièce d'oeuvre (3) et hotte de collecte de copeaux (2).

14. Dispositif selon la revendication 13, **caractérisé en ce que** le dispositif de recouvrement (15) présente un élément élastique, en particulier une tôle à ressort (15), disposée de préférence dans la zone d'éjection des copeaux de l'outil (1).
